Europäisches Patentamt

European Patent Office

Office européen des brevets

(11) Publication number: **0 340 632 B1**

(12) **EUROPEAN PATENT SPECIFICATION**

(45) Date of publication of patent specification: **09.03.94**

(51) Int. Cl.5: **G01C 3/10**, G21C 17/00

(21) Application number: **89107626.7**

(22) Date of filing: **27.04.89**

(54) **Position locating apparatus for an underwater moving body.**

(30) Priority: **06.05.88 JP 59833/88 U**
**20.12.88 JP 164562/88 U**

(43) Date of publication of application:
**08.11.89 Bulletin 89/45**

(45) Publication of the grant of the patent:
**09.03.94 Bulletin 94/10**

(84) Designated Contracting States:
**DE FR GB**

(56) References cited:
**US-A- 3 798 795**
**US-A- 4 010 636**

**TRANSACTIONS A.S.M.E., SECTION B, JOURNAL OF ENGINEERING FOR INDUSTRY, vol. 92B, no. 2, May 1970, pages 288-292; D.R. BORCHARDT et al: "The underwater laser surveying system: A new concept"**

**ZEISS INFORMATIONEN, vol. 20, no. 80, 15th August 1972, pages 24-27; R. BORNEFELD: "Die Aufgaben der Elektronik im Reg Elta 14"**

**PATENT ABSTRACTS OF JAPAN, vol. 10, no. 57 (P-434)[2114], 7th March 1986; & JP-A-60 201 250**

(73) Proprietor: **MITSUBISHI JUKOGYO KABUSHIKI KAISHA**
**5-1, Marunouchi 2-chome**
**Chiyoda-ku**
**Tokyo 100(JP)**

(72) Inventor: **Murakawa, Shinichi Takasago Technical Institute of**
**Mitsubishi Jokugyo**
**1-1, Shinhama 2-chome**
**Arai-cho Takasago-shi Hyogo-ken(JP)**
Inventor: **Fujiwara, Masahiro Takasago Technical Institute of**
**Mitsubishi Jokugyo**
**1-1, Shinhama 2-chome**
**Arai-cho Takasago-shi Hyogo-ken(JP)**
Inventor: **Tachibana, Kiyoshi Kobe Shipyard & Engine Works of**
**Mitsubishi Jokugyo K.K.**
**1-1, Wadasaki-cho 1-chome**
**Hyogo-ku Kobe-shi Hyogo-ken(JP)**
Inventor: **Yoshioka, Kyoichi Kobe Shipyard & Engine Works of**
**Mitsubishi Jokugyo K.K.**
**1-1, Wadasaki-cho 1-chome**
**Hyogo-ku Kobe-shi Hyogo-ken(JP)**

EP 0 340 632 B1

Inventor: **Aoyama, Tomio Kobe Shipyard & Engine Works of Mitsubishi Jokugyo K.K. 1-1, Wadasaki-cho 1-chome Hyogo-ku Kobe-shi Hyogo-ken(JP)**

(74) Representative: **Henkel, Feiler, Hänzel & Partner Möhlstrasse 37 D-81675 München (DE)**

**Description**

BACKGROUND OF THE INVENTION:

Field of the Invention:

The present invention relates to a position detecting system for detecting a position of an underwater moving body, which is applicable to a supersonic crack detecting system for an atomic reactor vessel (UT machine), and to metering of coordinates of tube header holes of an atomic reactor vessel, metering of center positions of key-slots and metering of sizes for use in a process of building a bridge by omitting temporary assembly.

Description of the Prior Art:

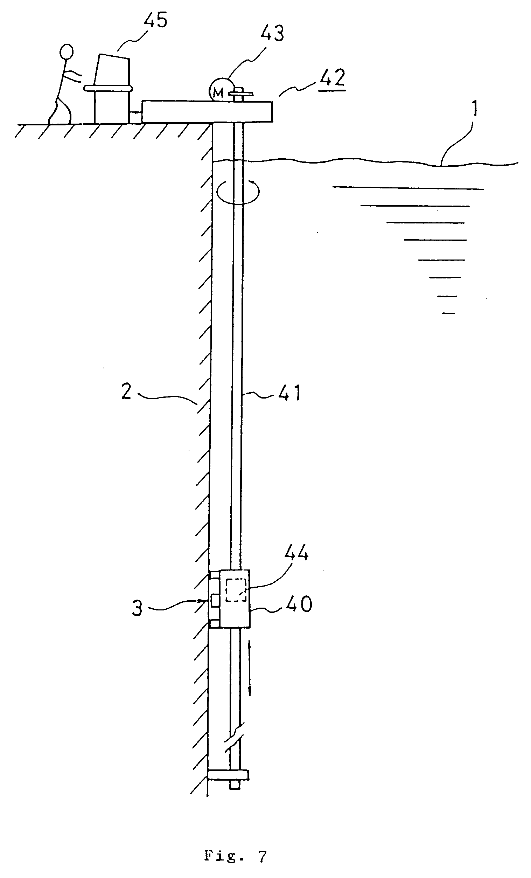

An outline of a system of the above-mentioned type in the prior art is shown in Fig. 7. Upon inspecting a structure 2 sunk in water 1 as shown in this figure, in the case where the structure 2 is a steel product or the like, generally supersonic crack detecting inspection is effected. This inspection is carried out while a movable truck 40 loaded with a supersonic sensor 3 is being moved up and down by the rotation of a rod 41. The rod 41 is rotationally driven by a drive motor 43 disposed on a position detecting and moving mechanism 42. Inspection data of the structure 2 obtained from the supersonic sensor 3 as a result of movement of this movable truck 40 are sent to a control unit 45 jointly with position data of the movable truck 40 which are measured by a position detector section 44 loaded on the movable truck 40, and the former data are compared with the latter data and thereby evaluated. It is to be noted that proceeding of the inspection is made to progress by the control unit 45. While the illustrated example is the case where the number of the rod 41 is one, by employing a plurality of rods 41 it is possible to simultaneously practice various inspections. In addition, in place of the supersonic sensor 3, if another measuring sensor is employed as loaded on the movable truck 40, various measurements would become possible without being limited to supersonic crack detecting inspection.

However, the inspection system in the prior art involved problems to be resolved as enumerated in the following:

(1) The position detecting and moving mechanism 42 for moving and controlling the movable truck 40 loaded with the supersonic sensor 3 became large-sized, and a lot of time and labor were necessitated for preparation of the inspection.

(2) A precision in position detection would become poor in proportion to the size of the detecting and moving mechanism 42 and the number of the rods 41, and a precision in reproduction also would not be satisfactorily obtained.

(3) In addition to the fact that a freedom in the procedure of inspection is little, the supersonic sensor 3 would be deviated from the position where inspection was necessitated in accordance with movement of the rods 41, hence it is necessitated to change the positions of the movable truck 40 and the rods 41, and a working efficiency is poor.

US-A-4 010 636 discloses a vessel examination system in which the position of a vehicle carrying inspection devices and being freely movable on the surface of a large-sized vessel such as a nuclear reactor vessel is detected and calculated with an ultrasonic signal system and a triangulation technique.

US-A-3 798 795 discloses the combination of a visual system and a distance measuring device in a weapon aim evaluation system. In this known system, however, a three-dimensional position determination accuracy is low because a TV camera for the visual system and an electromagnetic wave range measurement device is employed. Further, an electromagnetic wave distance measuring system is not practicable under water.

From "Transactions A.S.M.E, section B: Journal of engeneering for industry, vol. 92B, no.2, 1970" there is known the use of an argon laser for measuring underwater distances between corners of fixed objects.

"Zeiss Informationen, vol.20, 1972" describes a geodetical instrument for measuring distances on the surface of the earth by means of normal light emitted by a luminescent diode.

SUMMARY OF THE INVENTION:

It is therefore one object of the present invention to provide a position detecting system for detecting a position of an underwater moving body, which can quickly and adequately achieve inspection of a structure, and especially can inspect a structure at a high precision in position detection when the structure is to be inspected.

According to the present invention, there is provided a position detecting system with the features of claim 1.

Further embodiments are recited in the subclaims.

According to the present invention, owing to the above-featured provision, the novel position detecting system can present the following effects and advantages. That is, position measurement by means of a large-sized position detecting and moving mechanism is not necessitated. Consequently, maneuverability is improved, shortening of a preparation time is achieved, a precision in measurement is improved, it becomes possible to greatly improve freedom of a movable truck, robots and the like, and reduction of cost as well as saving of human labor for inspection of structures or the like can be realized.

The above-mentioned and other objects, features and advantages of the present invention will become more apparent by reference to the following description of one preferred embodiment of the present invention taken in conjunction with the accompanying drawings.

## BRIEF DESCRIPTION OF THE DRAWINGS:

In the accompanying drawings:

Figs. 1 to 4 jointly illustrate one preferred embodiment of the present invention;

Fig. 1 is a schematic view showing a general construction of a position detecting system according to one preferred embodiment of the present invention;

Fig. 2 is a more detailed illustration of principal portions of the same system;

Fig. 3 is a flow chart showing a procedure for calculating a position of a truck;

Fig. 4 is a schematic view showing an angle to be used in the calculation for the position of the truck;

Figs. 5 and 6 are schematic representations of a corner cube and a light source on a movable truck and a position detecting section to be used in the aforementioned preferred embodiment; and

Fig. 7 is a schematic view showing a position detecting system for detecting the position of an underwater moving body in the prior art.

## DESCRIPTION OF THE PREFERRED EMBODIMENT:

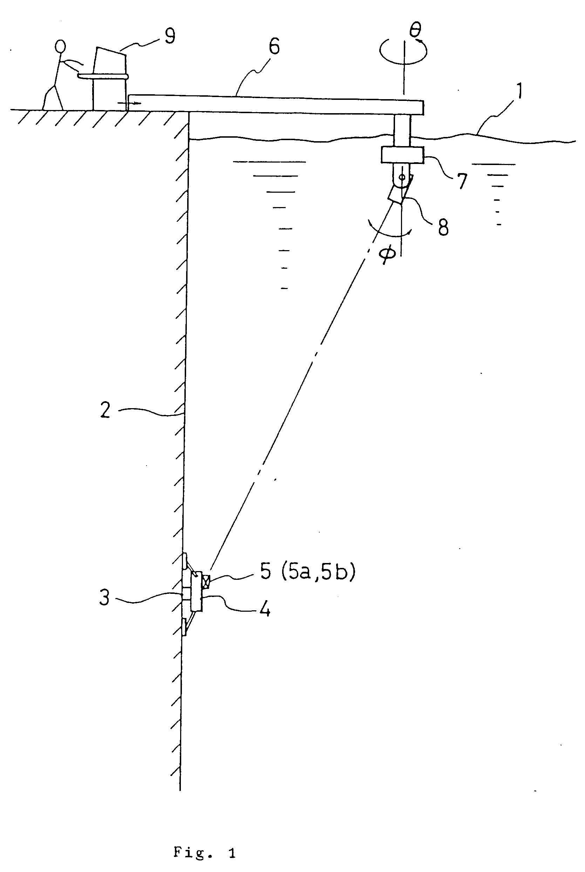

One preferred embodiment of the present invention is illustrated in Figs. 1 to 4. It is to be noted that component members equivalent to those of the heretofore known system shown in Fig. 7 are given the same reference numerals. A general construction of the position detecting system for detecting the position of an underwater moving body according to the present invention is shown in Fig. 1. A truck target 5 consisting of a corner cube 5a formed of a reflector and a spherical light source 5b, is loaded on a movable truck 4 having a large freedom such as a trackless type inspecting truck or an underwater robot, which moves along a wall of a structure 2 in water 1. A position detector section 7 for position detecting purpose is mounted so as to be rotatable about its vertical axis at the bottom of a tip end portion of a frame 6 that is firmly secured to the top of the structure 2. To this position detector section 7 is mounted a sensor head 8 in a state swingable along a vertical plane so as to be able to catch the movable truck 4. Reference numeral 9 designates a control unit for measuring the position of the movable truck 4 on the basis of the rotational angle $\theta$ of the position detector section 7 and the swing angle $\phi$, i.e., the head swing angle of the sensor head 8.

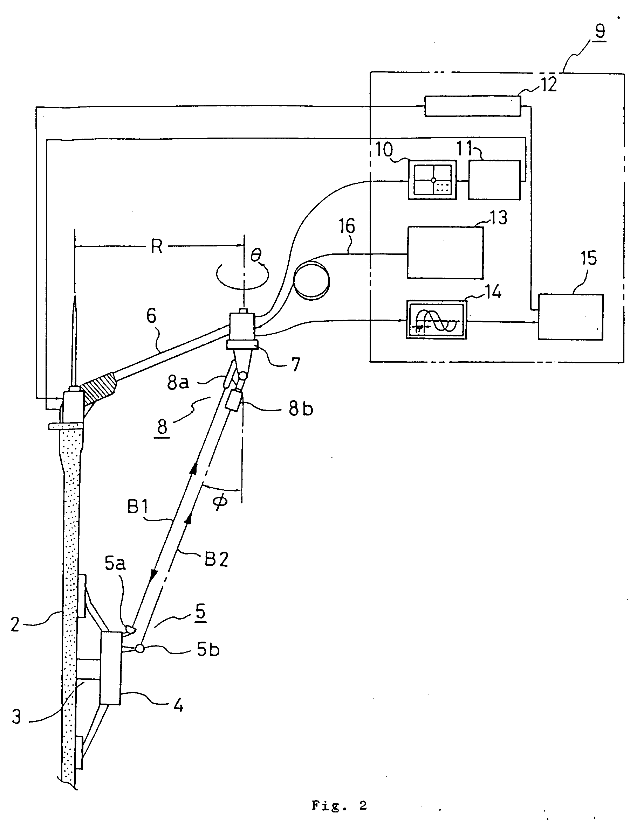

Fig. 2 shows principal portions of the position detecting system in Fig. 1 in greater detail. In the sensor head 8 are provided a length measuring head 8a for emitting a laser beam B1 towards the corner cube 5a on the movable truck 4, and a visual sensor 8b for receiving a spherical light beam B2 emitted from a spherical light source 5b on the movable truck 4. The laser beam B1 irradiated to the corner cube 5a formed of a reflector is reflected thereby. The above-mentioned laser beam B1 and the spherical light source beam B2 are emitted with their optical axes held in parallel to each other. The control unit 9 comprises an image processor 10 for measuring and processing (image-processing) a center point of the spherical light source after the spherical light source (pattern-recognized as a circle) has been detected by the visual sensor 8b, a follow control device 11 for measuring and processing a deviation amount and a direction of the spherical light source and transmitting a follow control signal to the position detector section 7 and a control section (not shown) of the sensor head 8 in order to make the visual sensor 8b follow the spherical light source 5b on the movable truck 4, and an angle measuring device 12 for detecting a head swing angle $\phi$ of the position detector section 7 to which the sensor head 8 is mounted and a rotational angle $\theta$ of the frame to which the position detector section 7 is mounted upon catch and follow of the above-mentioned movable truck 4 by means of the position detector section 7 and for detecting an azimuth angle of the sensor head 8 on the basis of the detection signal, transmitting the azimuth angle to a three-dimensional position measuring device 15 as will be described later, and simultaneously transmitting it also to the above-described follow control device 11. Furthermore, the control unit 9 includes an argon laser modulation optical system 13 for feeding a laser beam to the length measuring head 8a (The argon laser has a wavelength of 4880Å (1Å = 0,1nm) and is subjected to intensity modulation at 80 MHz. It is to be noted that the wavelength of 4880Å is a wavelength of light selected from the view point of minimizing attenuation of light in water, the modulation at 80 MHz is a condition for distance measurement by light wave, and one modulation wavelength in water becomes about 2.824 m), a heterodyne type phase difference meter 14 for measuring the distance between the sensor head 8 and the movable truck 4, and a three-dimensional position measuring device 15 for calculating the position of the movable truck on the basis of the informations sent from the above-described angle measuring device 12 and phase difference meter 14. Reference numeral 16 designates an optical fiber for transmitting a light signal.

In the following, the operation of the illustrated system will be explained with respect to a number of items:

(Truck target)

The movement of the movable truck 4 can be known in a non-contact manner by catching a spherical light source beam B2 emitted from the spherical light source 5b loaded on the movable truck 4 by means of the visual sensor 8b. In addition, on the basis of the information relating to the movement of the movable truck 4, a length measuring axis consisting of the laser beam B1 that is parallel to the spherical light source beam B2 can be produced.

(Automatic follow)

A center of gravity (dx, dy) of the spherical light source 5b is calculated, and thereby a deviation amount from the center of axis is detected.

$$\left. \begin{array}{l} dx = (1/Nx) \times \displaystyle\sum_{i=1}^{i=Nx} Xi \\[2em] dy = (1/Ny) \times \displaystyle\sum_{i=1}^{i=Ny} Yi \end{array} \right\} \quad \cdots\cdots\cdots \; ①$$

In addition, with regard to a control amount, a signal is transmitted to the follow control device 11 so that the deviation amount may be held constant through the following procedure:

$$\left. \begin{array}{l} \pm X = xo - dx \\[1em] \pm Y = yo - dy \end{array} \right\} \quad \cdots\cdots\cdots \; ②$$

Thus, the deviation amount is always kept constant. In addition, position detection of the movable truck 4 is carried out by means of the rotational angle $\theta$ of the position detector section 7 and the head swing angle $\phi$ of the sensor head 8 which are transmitted from the angle measuring device 12. Accordingly, the follow control device 11 would be controlled in such manner that the position detector section 7 may always follow the truck target 5.

(Underwater length measurement by means of the laser length measuring means)

In order to measure the distance between the truck target 5 and the follow sensor 8, length measuring information is given to a light beam in the argon laser modulation optical system 13 by employing, for instance, an argon laser which has minimum attenuation of light in water, thus a light signal (a laser beam B1) is transmitted from the length measuring head 8a via a single mode optical fiber 16, and thereby a length is measured between the length measuring head 8a and the corner cube 5a.

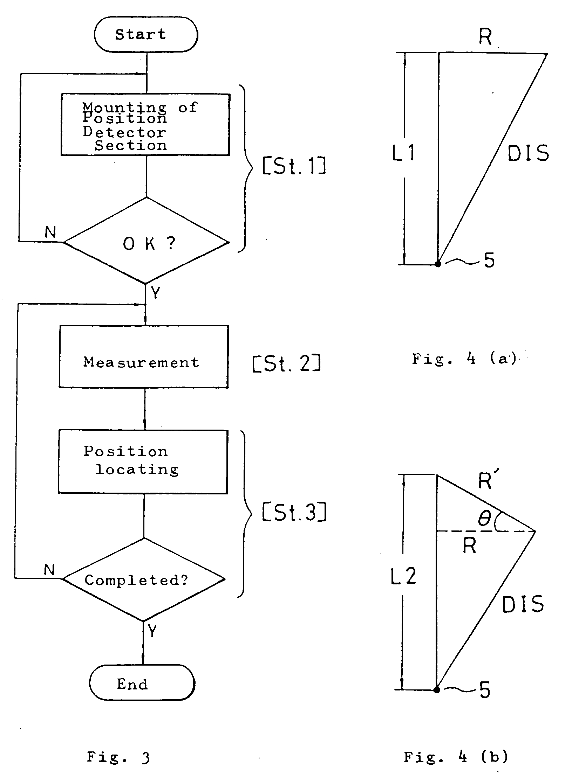

The length to be measured is a distance DIS along the laser beam B1, and in order to measure this distance, the argon laser beam B1 emitted from the length measuring head 8a is reflected by the corner cube 5a, the length measuring head 8a receives this reflected laser beam, and after this received laser beam has been subjected to opto-electrical transformation, the output electric signal is transmitted to the phase difference meter 14. Then, in the phase difference meter 14, the phase difference between the laser beam B1 emitted towards the corner cube 5a and the laser beam reflected by the corner cube 5a, is measured. As will be apparent from Fig. 4, the distance DIS between the truck target 5 and the follow sensor 8 is calculated on the basis of the following equations. It is to be noted that the length measurement information was illustrated for one modulation cycle, by way of example, assuming a modulation frequency f of 80 MHz.

$$DIS = N \times [C/(2 \times f \times \eta)] + [C \times P/(2 \times f \times \eta \times 360)] \quad ③$$

where DIS represents a measured distance (m), C represents a light velocity $(3 \times 10^8 \, (m/s))$, f represents a modulation frequency (Hz), $\eta$ represents a refractory index of medium (1.333 in water), N represents repetition cycles (integer), P represents a measured phase (deg.), and one modulation wavelength is about 2.824 m.

It is to be noted that while the head swing angle $\phi$ is measured, as the depth in water increases a precision for the angle $\phi$ would be degraded. This is because the spherical light source 5b is observed by the visual sensor 8b at a position somewhat deviated from its correct position due to refraction of light. Therefore, in practice, the distance DIS is calculated from the measured angle $\phi$ and the distance R in the horizontal direction of the position detector section 7 from the structure 2, from this calculated distance value DIS it is determined how many cycles the modulation phase has varied, and thus the repetition cycles N is determined. Even though the precision for the angle $\phi$ is somewhat poor, evaluation of the repetition cycles N can be well achieved. The correct distance DIS can be measured by adding the distance calculated from the repetition cycles N (integer) :

$$N \times \left( \frac{C}{2 f \times \eta} \right)$$

to the distance calculated from the phase difference measured by the phase difference meter 14 :

$$\left( \frac{C}{2 f \times \eta} \times \frac{P}{360} \right).$$

This is the above-described Equation-③.

(Position locating for the truck target)

In the three-dimensional position measuring device 15, position locating for the movable truck 4 is carried out on the basis of the rotational angle $\theta$ of the position locating detector section 7 and the head swing angle $\phi$ of the sensor head 8 transmitted from the angle measuring device 12 and the distance information DIS transmitted from the phase difference meter 14.

In the following, description will be made on the process of locating the position of the movable truck by referring to Figs. 3 and 4 from time to time:

[St. 1]

At the time point when the position detector section 7 and the frame 6 have been set in position, the positioning distance R of the position detector section 7 and the frame 6 is measured.

[St. 2]

The rotational angle $\theta$ of the above-mentioned detector section 7 and the head swing angle $\phi$ of the sensor head 8 and the distance DIS between the above-mentioned sensor 8 and the truck target 5 are measured.

[St. 3]

Position locating for the movable truck 4 is carried out on the basis of the distance information DIS, the rotational angle $\theta$ and the head swing angle $\phi$.

(When the rotational angle $\theta$ is zero)

A distance L1 of the truck target 5 shown in Fig. 4(a) is calculated by the following formula, and position locating is effected:

$$\text{L1} = \text{DIS} \times \text{Sin} [\text{Cos}^{-1}(\text{R/DIS})] \qquad ④$$

(When the rotational angle $\theta$ is not zero)

A distance L2 of the truck target 5 shown in Fig. 4(b) is calculated by the following formula, and position locating is effected:

$$\text{R'} = \text{R/Cos}\theta$$
$$\text{L2} = \text{DIS} \times \text{Sin} [\text{Cos}^{-1}(\text{R'/DIS})] \qquad ⑤$$

In other words, even in the case where the truck target 5 to be located has moved three-dimensionally with reference to the reference position R, locating is possible. As described above, the head swing angle $\phi$ of the sensor head 8 is used for determining the repetition cycles N appearing in the Equation - ③ , and it is not directly used in the calculation for position locating. This is a counter-measure for preventing measurement errors caused by the fact that the optical paths of the laser beam B1 and the spherical light source beam B2 would bend due to variations of a refractory index caused by density variation of water under a temperature distribution in water, and hence a precision in measurement cannot be maintained.

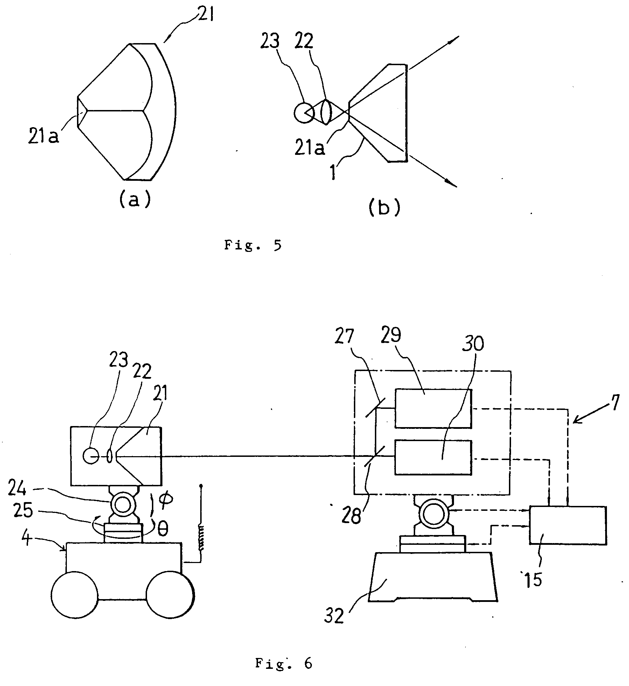

Another example of the corner cube and the light source on the movable truck 4 the position detector section 7 to be used in the above-described embodiment will be described in greater detail with reference to Fig. 6. In the illustrated apparatus, a target is constructed integrally by disposing a corner cube and a light source on the same axis, and in the position detector section also, such structure that a laser length measuring device and a visual sensor can make measurement on the same optical axis by employing a half-mirror and a total reflection mirror, is employed.

As shown in Fig. 5(a) a corner cube 21 has its back surface cut into a triangular pyramid shape, and as shown in Fig. 5(b) it is possible to make light entered through the cut surface 21a pass to a front surface. Reference numeral 22 designates a condenser lens consisting of, for instance, a ball lens, which focuses light from a light source 23 on the cut surface 21a of the corner cube 21 and makes it diffuse at the front surface of the corner cube. Thereby it becomes possible to emit light of a light source from the corner cube, hence a light source and a corner cube which were provided individually in the prior art, can be formed as an integral structure.

A construction of the position detector section 7 is shown in Fig. 6. In this figure, reference numeral 28 designates a half mirror which distributes a light beam of a light source 23 and a returning laser beam of a laser length measuring instrument 30 both lying on the same axis to a visual sensor 29 and the laser length measuring instrument 30. Reference numeral 27 designates a total reflection mirror which leads the light beam distributed by the half mirror 28 to the visual sensor 29. Owing to these mirrors (the half mirror and the total reflection mirror), it has become possible to dispose the visual sensor 29 and the laser length measuring instrument 30 in juxtaposition and to utilize an incident light on the same axis. By joining two optical axes into one axis by employing the above-mentioned construction, it becomes possible to make the visual sensor 29 and the laser length measuring instrument 30 operate precisely.

In Fig. 6, reference numeral 24 designates a $\phi$-direction drive unit, numeral 25 designates a $\theta$-direction drive unit, and numeral 32 designates a fixed table (frame). The values of the angles $\phi$ and $\theta$ detected by the visual sensor 29 and the value of distance DIS detected by the laser length measuring instrument 30 are fed to the position measuring device 15, where the position of the movable truck 4 is calculated on the basis of the above-described formulae.

7

As will be apparent from the above description, according to the present invention, position measurement by making use of a large-sized position detecting movable mechanism is not necessitated, but three-dimensional position measurement becomes possible in a non-contact manner. Therefore, a maneuverability of the apparatus is improved, shortening of a preparation time is achieved, a precision in measurement is enhanced, great improvement in a freedom of a movable truck, a robot and the like can be realized, and reduction of cost as well as saving of human labor in inspection of a structure can be achieved.

Furthermore, if the device shown in Fig. 6 is used in practicing the present invention, since the system is constructed in such manner that measurement can be performed with the light source, the corner cube, the laser length measuring instrument and the visual sensor all placed on the same axis, even if the target moves, the laser beam emitted from the laser length measuring means would be hardly deviated from the corner cube, hence attitude control for the target section becomes easy, and a highly precise mechanism is not necessitated in the drive system for attitude control. In addition, in the target section also, since the light source and the corner cube is constructed in an integral structure, small-sizing of an apparatus becomes possible.

## Claims

1. A position detecting system for detecting a position of an underwater movable body (4) which is adapted to move along a structure (2) and is provided with an inspection device (3), comprising:

    a target device (5) to be mounted on the movable body (4) and including a corner cube (5a,21) having means for reflecting a laser beam (B1), and a light source means (5b, 23) for emitting a light beam (B2);

    follower means (7), angularly rotatable about a vertical axis and including a sensor head (8) angularly swingable relative to said vertical axis, for automatically following said target device (5), said sensor head (8) including a length measuring means (30), having a length measuring head (8a) separated from said target device (5) by a horizontal reference distance (R), for emitting an argon laser beam (B1) to said corner cube (5a, 21), receiving said argon laser beam (B1) when reflected by said corner cube (5a,21)and producing a length signal based thereon, and a visual sensor means (8b) for detecting said light beam (B2) emitted by said light source means (5b, 23) and for producing a visual sensor signal; and

    control means (9) for receiving said length signal and said visual sensor signal, for measuring a rotational angle ($\theta$) of said follower means (7) and a swing angle ($\phi$) of said sensor head (8), and for determining the position of the movable body (4) on the basis of said swing angle ($\phi$), said rotational angle ($\theta$), said length signal and said horizontal reference distance (R);

    said light source means (5b, 23), said corner cube (5a, 21), said visual sensor means (8b) and said length measuring head (8a) are mounted, respectively, in a manner such that a line between said length measuring head (8a) and said corner cube (5a, 21) is parallel to a line between said light source means (5b, 23) and said visual sensor means (8b).

2. A position detecting system as recited in claim 1, wherein
    said control means (9) comprises an argon laser modulation optical system (13) and a phase difference meter (14).

3. A position detecting system as recited in claim 1, further comprising
    a frame (6, 32) adapted to be mounted to the structure (2) along which the underwater movable body (4) is adapted to move, said follower means (7) being mounted to said frame (6, 32).

4. A position detecting system as recited in claim 1, wherein
    said corner cube (21) has a back portion shaped as a truncated triangular pyramid with a narrow truncated rear end (21a) and a wide front end, said light source means (23) is mounted rearwardly of said corner cube (21), and a lens means (22) is mounted between said light source means (23) and said corner cube (21) for causing said light emitted from said light source means (23) to pass through said truncated rear end (21a).

5. A position detecting system as recited in claim 4, wherein
    said corner cube (21) includes means for reflecting said laser beam back to said length measuring means; and
    said length measuring means (30) is further operable to receive said argon laser beam (B1) after it is reflected by said reflecting means of said corner cube (21).

6. A position detecting system as recited in claim 1, wherein
said follower means (7) further comprises means for making said light beam (B2) emitted from said light source means (5b, 23) colinear with said laser beam (B1).

7. A position detecting system as recited in claim 6, wherein
said means for making said light beam (B2) colinear with said laser beam (B1) comprises a partial reflection mirror (28) and a full reflection mirror (27),
said visual sensor means (8b, 29) is operable to produce an image signal; and
said control means (9) comprises an image processor means (10) for processing said image signal, and a follow control means (11) for producing a control signal to cause said follower means (7) to follow said light source means (5b, 23) of said target device (5).

8. A position detecting system as recited in claim 2, wherein
said argon laser modulation optical system (13) is connected to said length measuring means (30) by an optical fiber (16).

9. A position detecting system as recited in one or more of the preceding claims, wherein
said length measuring means (30) further comprises means for producing the argon laser beam modulated at 80 MHz.

## Patentansprüche

1. Positionsbestimmungsgerät zum Bestimmen einer Position eines unter Wasser bewegbaren Körpers (4), der sich längs einer Struktur (2) zu bewegen vermag und mit einer Inspektions- oder Prüfvorrichtung (3) versehen ist, umfassend:
eine am bewegbaren Körper (4) montierbare Ortungs- oder Zielvorrichtung (5), enthaltend einen kubischen Eckenreflektor (5a, 21) mit Einheit zum Reflektieren eines Laserstrahls (B1) sowie eine Lichtquelleneinheit (5b, 23) zum Emittieren eines Lichtstrahls (B2),
eine um eine lotrechte Achse über einen Winkel drehbare und einen relativ zur lotrechten Achse winkelmäßig schwenkbaren Sensorkopf (8) aufweisende Nachführeinheit (7) zum automatischen Folgen der Ortungsvorrichtung (5), wobei der Sensorkopf (8) eine Längenmeßeinheit (30) aufweist, die mit einem von der Ortungsvorrichtung (5) um einen waagerechten Bezugsabstand (R) getrennten Längenmeßkopf (8a) zum Emittieren bzw. Aussenden eines Argonlaserstrahls (B1) zum kubischen Eckenreflektor (5a, 21), zum Empfangen des vom kubischen Eckenreflektor (5a, 21) reflektierten Argonlaserstrahls (B1) und zum Erzeugen eines darauf basierenden Längensignals sowie mit einer visuellen Sensoreinheit (8b) zum Detektieren des von der Lichtquelleneinheit (5b, 23) emittierten Lichtstrahls (B2) und zum Erzeugen eines visuellen Sensorsignals versehen ist, und
eine Steuereinheit (9) zum Empfangen des Längensignals und des visuellen Sensorsignals, zum Messen eines Rotationswinkels ($\theta$) der Nachführeinheit (7) und eines Schwingwinkels ($\phi$) des Sensorkopfes (8) sowie zum Bestimmen der Position des bewegbaren Körpers (4) auf der Grundlage des Schwingwinkels ($\phi$), des Rotationswinkels ($\theta$), des Längensignals und des waagerechten Bezugsabstands (R),
wobei die Lichtquelleneinheit (5b, 23), der kubische Eckenreflektor (5a, 21), die visuelle Sensoreinheit (8b) und der Längenmeßkopf (8a) jeweils in der Weise montiert sind, daß eine Linie zwischen dem Längenmeßkopf (8a) und dem kubischen Eckenreflektor (5a, 21) parallel zu einer Linie zwischen der Lichtquelleneinheit (5b, 23) und der visuellen Sensoreinheit (8b) liegt.

2. Positionsbestimmungsgerät nach Anspruch 1, wobei
die Steuereinheit (9) eine Argonlaser-Modulationsoptik (13) und einen Phasendifferenzmesser (14) aufweist.

3. Positionsbestimmungsgerät nach Anspruch 1, ferner umfassend
einen Rahmen (6, 32), der an der Struktur (2), längs welcher sich der unter Wasser bewegbare Körper (4) zu bewegen vermag, anbringbar ist, wobei die Nachführeinheit (7) am Rahmen (6, 32) montiert ist.

**4.** Positionsbestimmungsgerät nach Anspruch 1, wobei

der kubische Eckenreflektor (21) einen als stumpfe Dreieckspyramide mit einem engen stumpfen hinteren Ende (21a) und einem weiten Vorderende geformten hinteren Abschnitt aufweist, die Lichtquelleneinheit (23) rückwärts vom kubischen Eckenreflektor (21) montiert ist und zwischen der Lichtquelleneinheit (23) und dem kubischen Eckenreflektor (21) eine Linseneinheit (22), um das von der Lichtquelleneinheit (23) emittierte Licht durch das stumpfe hintere Ende (21a) hindurchfallen zu lassen, montiert bzw. angeordnet ist.

**5.** Positionsbestimmungsgerät nach Anspruch 4, wobei

der kubische Eckenreflektor (21) eine Einheit zum Reflektieren des Laserstrahls zur Längenmeßeinheit zurück aufweist und

die Längenmeßeinheit (30) ferner den Argonlaserstrahl (B1) zu empfangen vermag, nachdem dieser durch die Reflektiereinheit des kubischen Eckenreflektors (21) reflektiert worden ist.

**6.** Positionsbestimmungsgerät nach Anspruch 1, wobei

die Nachführeinheit (7) ferner eine Einheit aufweist, um den von der Lichtquelleneinheit (5b, 23) emittierten Lichtstrahl (B2) mit dem Laserstrahl (B1) gleichlaufend bzw. gleichachsig (colinear) zu machen.

**7.** Positionsbestimmungsgerät nach Anspruch 6, wobei

die Einheit, um den Lichtstrahl (B2) mit dem Laserstrahl (B1) gleichlaufend bzw. gleichachsig (colinear) zu machen, einen Teil(reflexions)spiegel (28) und einen Voll(reflexions)spiegel (27) umfaßt,

die visuelle Sensoreinheit (8b, 29) ein Bildsignal zu liefern vermag und

die Steuereinheit (9) eine Bildprozessoreinheit (10) zum Verarbeiten des Bildsignals sowie eine Folge- oder Nachführsteuereinheit (11) zum Erzeugen eines Steuersignals, um die Nachführeinheit (7) der Lichtquelleneinheit (5b, 23) der Zielvorrichtung (5) folgen zu lassen, aufweist.

**8.** Positionsbestimmungsgerät nach Anspruch 2, wobei

die Argonlaser-Modulationsoptik (13) über einen Lichtleiter (16) mit der Längenmeßeinheit (30) verbunden ist.

**9.** Positionsbestimmungsgerät nach einem oder mehreren der vorangehenden Ansprüche, wobei

die Längenmeßeinheit (30) ferner eine Einheit zum Erzeugen des auf 80 MHz modulierten Argonlaserstrahls aufweist.

## Revendications

**1.** Un système de détection de position servant à détecter une position d'un corps mobile immergé (4) qui est apte à se déplacer le long d'une structure (2) et qui est pourvu d'un dispositif d'inspection (3), comprenant:

un dispositif cible (5) à monter sur le corps mobile (4) et incluant un réflecteur dièdre (5a, 21) pourvu de moyens pour réfléchir un faisceau laser (B1) et un moyen de source lumineuse (5b, 23) pour émettre un faisceau lumineux (B2);

un moyen suiveur (7), susceptible de tourner de façon angulaire autour d'un axe vertical et incluant une tête (8) de capteur pouvant pivoter de façon angulaire par rapport audit axe vertical afin de suivre automatiquement ledit dispositif cible (5), ladite tête (8) de capteur incluant un moyen de mesure (30) de longueur comprenant une tête de mesure (8a) séparée dudit dispositif cible (5) par une distance horizontale de référence (R), servant à émettre un faisceau laser (B1) à l'argon vers ledit réflecteur dièdre (5a, 21), à recevoir ledit faisceau laser (B1) à l'argon lorsqu'il est réfléchi par ledit réflecteur dièdre (5a, 21) et à produire sur la base de ceci un signal de longueur, et un moyen capteur visuel (8b) pour détecter ledit faisceau lumineux (B2) émis par ledit moyen de source lumineuse (5b, 23) et pour produire un signal de capteur visuel; et

un moyen de commande (9) servant à recevoir ledit signal de longueur et ledit signal de capteur visuel afin de mesurer un angle de rotation ($\Theta$) dudit moyen suiveur (7) et un angle d'orientation ($\Phi$) de ladite tête (8) de capteur, et à déterminer la position du corps mobile (4) sur la base dudit angle d'orientation ($\Phi$), dudit angle de rotation ($\Theta$), dudit signal de longueur et de ladite distance de référence horizontale (R);

ledit moyen de source lumineuse (5b, 23), ledit réflecteur dièdre (5a, 21), ledit moyen capteur visuel (8b) et ladite tête (8a) de mesure de longueur sont montés, respectivement, d'une manière telle qu'une ligne entre ladite tête de mesure (8a) de longueur et ledit réflecteur dièdre (5a, 21) est parallèle à une ligne entre ledit moyen de source lumineuse (5b, 23) et ledit moyen capteur visuel (8b).

2.  Un système de détection de position selon la revendication 1, dans lequel
    ledit moyen de commande (9) comprend un système optique (13) de modulation à laser à l'argon, et un instrument de mesure (14) de différence de phase.

3.  Un système de détection de position selon la revendication 1, comprenant en outre
    un cadre (6, 32) apte à être monté sur la structure (2) le long de laquelle le corps mobile immergé (4) est apte à se déplacer, ledit moyen suiveur (7) étant monté sur ledit cadre (6, 32).

4.  Un système de détection de position selon la revendication 1, dans lequel
    ledit réflecteur dièdre (21) comprend une partie arrière en forme de pyramide triangulaire tronquée à extrémité arrière tronquée étroite (21a) et à extrémité avant large, ledit moyen de source lumineuse (23) est monté en arrière dudit réflecteur dièdre (21), et un moyen de lentille (22) est monté entre ledit moyen (23) de source lumineuse et ledit réflecteur dièdre (21) afin d'amener ladite lumière émise par ledit moyen de source lumineuse (23) à traverser ladite extrémité arrière tronquée (21a).

5.  Un système de détection de position selon la revendication 4, dans lequel
    ledit réflecteur dièdre (21) inclut un moyen de réflexion dudit faisceau laser en retour vers ledit moyen de mesure de longueur; et
    ledit moyen de mesure (30) de longueur peut en outre servir à recevoir ledit faisceau laser (31) à l'argon quand il a été réfléchi par ledit moyen réflecteur dudit réflecteur dièdre (21).

6.  Un système de détection de position selon la revendication 1, dans lequel
    ledit moyen suiveur (7) comprend en outre un moyen servant à rendre colinéaire audit faisceau laser (B1) ledit faisceau lumineux (B2) émis par ledit moyen de source lumineuse (5b, 23).

7.  Un système de détection de position selon la revendication 6, dans lequel
    ledit moyen servant à rendre ledit faisceau lumineux (B2) colinéaire avec ledit faisceau laser (B1) comprend un miroir à réflexion partielle (28) et un miroir à réflexion totale (27),
    ledit moyen capteur visuel (8b, 29) peut servir à produire un signal d'image; et
    ledit moyen de commande (9) comprend un moyen processeur (10) d'image pour traiter ledit signal d'image et un moyen de commande (11) de suivi pour produire un signal de commande afin d'amener ledit moyen suiveur (7) à suivre ledit moyen de source lumineuse (5b, 23) dudit dispositif cible (5).

8.  Un système de détection de position selon la revendication 2, dans lequel
    ledit système optique (13) de modulation de laser à l'argon est relié audit moyen de mesure (30) de longueur par une fibre optique (16).

9.  Un système de détection de position selon une ou plusieurs des revendications précédentes, dans lequel
    ledit moyen de mesure (30) de longueur comprend en outre un moyen de production du faisceau laser à l'argon modulé à 80 MHz.

11

Fig. 1

Fig. 2

Fig. 3

Fig. 4 (a)

Fig. 4 (b)

Fig. 5

Fig. 6

Fig. 7